# DEMANDE DE BREVET EUROPEEN

(11) **EP 0 959 612 A1**
(43) Date de publication de la demande: **24.11.1999**
(21) Numéro de dépôt: 99401173.2
(22) Date de dépôt: 14.05.1999
(51) Int. Cl.: H04N 1/32, H04N 1/40, G03G 15/00, G06K 15/00

(54) **Imprimante à tambour électrostatique à vitesse variable**

(30) Priorité: 20.05.1998 FR 9806371
(71) Demandeur: SAGEM SA, 75116 Paris (FR)
(72) Inventeur: Nauche, Gilles, 92400 Courbevoie (FR)
(74) Mandataire: Bloch, Gérard

(57) **Abrégé**

L'imprimante à tambour de formation d'image électrostatique (1), couplé à un moteur (31) d'entraînement en rotation, comporte un séquenceur (21) agencé pour, d'une part, lire à un rythme déterminé une mémoire (222) de réception de données numériques de lignes d'image, et pour commander, par les données, un émetteur (5) d'un faisceau optique de balayage ligne du tambour (1) et pour, d'autre part, commander, par le moteur (31), une rotation du tambour synchronisée sur le rythme de lecture des lignes, des circuits (23) de détermination du taux de remplissage de la mémoire (222) commandant, par le séquenceur (21), une régulation du taux de remplissage de la mémoire (222), par une modulation du rythme de lecture de celle-ci, avec une modulation correspondante de la vitesse de rotation du tambour (1).

## Description

Pour l'impression de pages de texte et, plus généralement, d'images produites par un équipement numérique de traitement de données, par exemple un télécopieur, on utilise une imprimante à tambour électrostatique. Celui-ci, préalablement chargé électriquement, tourne à vitesse fixe et est balayé selon une génératrice par un faisceau laser ponctuel de décharge commandé par des données représentant les pixels des lignes successives de la page à imprimer. Le faisceau produit ainsi sur la surface du rouleau une image électrostatique, latente, surface qui est mise en contact avec des particules d'encre, ou toner, d'une cartouche angulairement en aval. Seules les zones de pixels non balayées attirent le toner et forment ainsi une image développée qui est ensuite transférée sur une feuille vierge plaquée sur le tambour par un rouleau de contre-appui angulairement en aval.

Pour imprimer une page, on attend, de façon classique, d'avoir reçu toutes les données d'image de la page avant de commencer l'impression, car l'image électrostatique est éphémère. Une interruption de l'impression pour attendre la réception des données de fin de page, en cas de défaut de transmission en ligne, risquerait de faire perdre la bande de lignes non encore restituées sur papier, situées entre l'impact du faisceau laser d'écriture et le rouleau aval de contre-appui. Il faudrait alors demander une réémission complète de la page.

Il faut donc prévoir une mémoire tampon ayant la capacité d'une page, pour ensuite dérouler une séquence régulière et ininterrompue d'impression des lignes de la page, avec une rotation correspondante, à vitesse fixe, du tambour. Or, le besoin en capacité pour une telle mémoire tend à croître à mesure que les définitions d'image s'améliorent et qu'on imprime en couleur et en demi-teintes.

La présente invention vise à limiter la capacité de ce tampon d'imprimante.

A cet effet, l'invention concerne une imprimante à tambour de formation d'image électrostatique, couplé à des moyens d'entraînement en rotation, imprimante comportant des moyens séquenceurs agencés pour, d'une part, lire à un rythme déterminé des moyens mémoires de réception de données numériques de lignes d'image, et pour commander, par lesdites données, des moyens émetteurs d'un faisceau optique de balayage ligne du tambour et pour, d'autre part, commander, par les moyens d'entraînement, une rotation synchronisée du tambour sur le rythme de lecture des lignes, caractérisée par le fait qu'elle comporte des moyens de détermination du taux de remplissage des moyens mémoires, agencés pour commander, par les moyens séquenceurs, une régulation du taux de remplissage des moyens mémoires, par une modulation du rythme de lecture de ceux-ci, avec une modulation correspondante de la vitesse de rotation du tambour et les moyens séquenceurs sont agencés pour commander des moyens de régulation de débit sur une liaison de données reliée aux moyens mémoires.

Ainsi, la vitesse du tambour est en fait asservie sur la vitesse moyenne des dernières données fournies à l'imprimante, puisque l'écart entre ces deux vitesses est traduit par le taux de remplissage. Si ce dernier croît excessivement, la vitesse du tambour va être accrue, pour arrêter cette croissance, ou au moins la limiter dans l'attente d'un temps mort dans la réception des données, qui évitera un débordement mémoire. On peut donc commencer l'impression sans attendre la réception de toutes les données, donc avec un tampon réduit.

Si le taux de remplissage devient relativement faible, le tambour va ralentir, dans l'attente de la réception de nouvelles données en volume suffisant.

Dans les deux cas, débordement ou vidage mémoire, le tambour sert de complément aux moyens mémoire. En effet, en cas de quasi-débordement, ceux-ci se vident sur le tambour. Mais surtout, en cas de quasi-vidage, on utilise le fait que le tambour possède un effet mémoire qui, bien qu'éphémère, se manifeste cependant plusieurs secondes sans dégradation sensible de l'image. On peut donc limiter la vitesse de vidage des moyens mémoires en abaissant la vitesse de rotation du tambour, jusqu'à une limite inférieure pour laquelle toute ligne d'image électrostatique atteint la feuille à imprimer au bout du délai de péremption de plusieurs secondes évoqué ci-dessus.

De ce fait, c'est le tambour qui sert de tampon et les moyens mémoires n'ont plus qu'un rôle de tampon différentiel, donc de taille très limitée, servant à absorber l'écart subsistant entre la vitesse du tambour et la vitesse moyenne de réception des dernières données. En outre, le volume des données concernées est très limité puisque les données sont imprimées à mesure qu'elles arrivent.

En outre, les moyens de régulation de débit de la liaison de données permettent de s'opposer à un débordement mémoire.

L'invention sera mieux comprise à l'aide de la description suivante d'une forme de réalisation préférée d'une imprimante à tambour d'un télécopieur selon l'invention, en référence au dessin annexé, sur lequel :

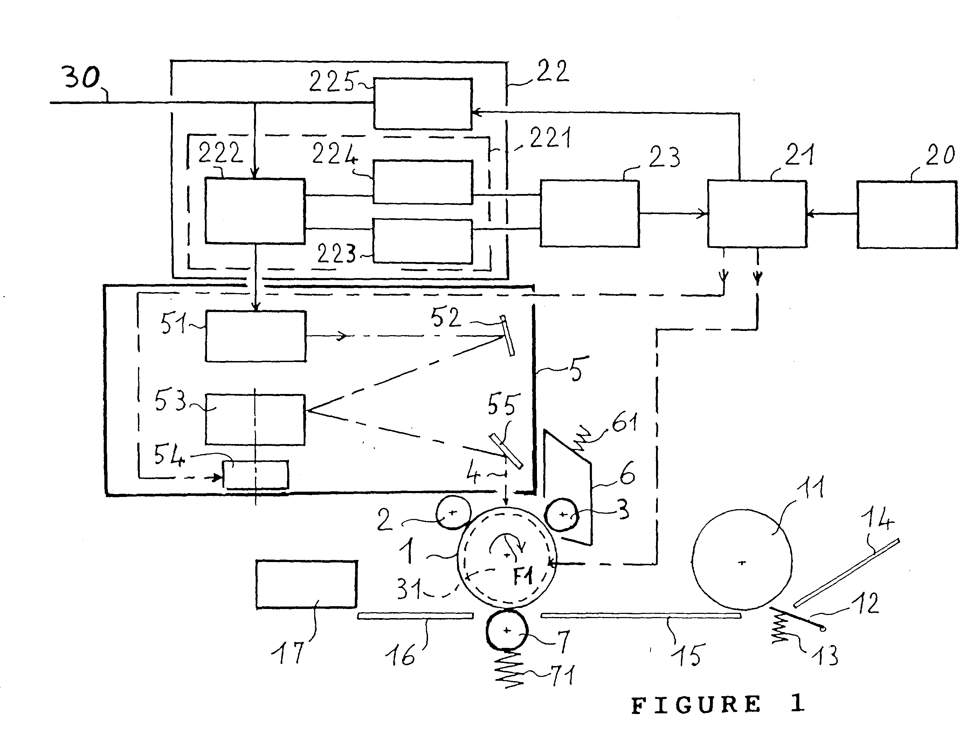

- la figure 1 représente schématiquement l'imprimante, par blocs fonctionnels, et
- la figure 2, formée des figures 2A et 2B, illustre l'évolution du remplissage d'une mémoire tampon de données d'image.

L'imprimante représentée comporte un rouleau d'impression photosensible 1, électrostatique, tournant ici dans le sens des aiguilles d'une montre selon la flèche F1 sous l'action d'un moteur pas à pas 31 auquel il est couplé. Le rouleau 1 est en contact avec un rouleau 2 de transfert de charges électrostatiques, au niveau de deux génératrices respectives. En aval, un faisceau lumineux ponctuel 4 provient d'un ensemble 5 à source optique, ici laser, agencé pour balayer une génératrice du rouleau 1 en modulant l'intensité du faisceau 4 selon des données d'image à imprimer, provenant d'une interface 22 de réception de données, reliée en entrée à une ligne 30 d'un réseau de transmission de données, comme le Réseau Téléphonique Commuté, RTC, ou l'INTERNET.

L'ensemble 5 comporte un laser 51 produisant un faisceau optique de rayons atteignant un miroir de repliement 52 le projetant sur une face d'un miroir tournant 53 entraîné par un moteur 54 commandé par l'unité centrale 21. Le faisceau réfléchi par le miroir 53 atteint un autre miroir de repliement 55 pour ensuite être réfléchi (4) vers la génératrice du rouleau 1, avec focalisation en un point. Le faisceau réfléchi par le miroir tournant 53 oscille ainsi dans une direction perpendiculaire au plan de la figure.

En aval, angulairement, de la génératrice atteinte par le faisceau 4 se trouve un rouleau de développement 3 en contact par une génératrice avec une génératrice du rouleau 1. Le rouleau du développement 3 fait saillie d'une cassette 6 de poudre d'impression, ou toner, qui le porte et est plaqué sur le rouleau 1 par un ressort 61 prenant appui sur le châssis de l'imprimante pour repousser la cassette 6 vers le rouleau 1.

Une génératrice d'un rouleau 7 de laminoir pour les feuilles à imprimer est en contact avec une génératrice du rouleau 1, en aval du rouleau 3, un ressort 71 prenant appui sur le châssis de l'imprimante pour plaquer le rouleau 7 sur le rouleau 1.

En amont du laminoir 1, 7 dans le trajet suivi par les feuilles de papier à imprimer, se trouve une plaque 14 de réception d'une pile de feuilles associée à un rouleau 11 d'entraînement par friction des feuilles une à une. Une plaque pivotante 12, rappelée vers le rouleau 11 par un ressort 13, assure le placage de la feuille supérieure de la pile contre le rouleau 11. Une glissière 15 assure le guidage des feuilles entre le rouleau 11 et le laminoir 1, 7.

En aval de celui-ci, une glissière 16 mène les feuilles imprimées à un four 17 de cuisson des pigments (6) qui y ont été déposés, suivi d'un laminoir d'extraction, non représenté.

En ce qui concerne l'électronique de commande, elle comporte une base de temps 20 commandant le séquencement d'une unité centrale à microprocesseur 21, de commande du moteur 31. L'interface 22 comporte des circuits 221 à mémoire tampon 222 reliée en entrée à la ligne 30 et, en sortie, à une entrée de commande de la source laser 5.

Un circuit 23 est relié aux circuits mémoires 221 pour en déterminer le taux ou volume de remplissage mémoire et fournir le résultat obtenu à l'unité centrale 21. Le circuit 23 est fonctionnellement un compteur décompteur qui avance au rythme des écritures en mémoire 222 depuis la ligne 30 et décompte au rythme des lectures de la mémoire 222 par la source 5.

Les circuits mémoires 221 comportent, outre la mémoire 222 exploitée en mode FIFO (Premier Entré, Premier Sorti), deux compteurs 223 et 224 de pointage du début et de la fin de la zone mémoire utilisée.

Le circuit 23 comporte un soustracteur qui calcule la différence entre les adresses des pointeurs 223 et 224 pour en déterminer le volume mémoire occupé. Il comporte en outre ici un additionneur, non représenté, pour ajouter un nombre, représentant la taille mémoire, (décalage modulo cette taille), au pointeur d'écriture si celui-ci, après avoir atteint l'adresse maximale de la mémoire, repasse par l'adresse minimale et se trouve donc alors à une valeur inférieure à celle du pointeur, de front arrière de lecture, qui le suit. Ainsi toute soustraction donnant un résultat négatif entraîne l'addition subséquente du nombre ci-dessus.

L'interface 22 comporte en outre des circuits de commande 225 reliés à la ligne 30 pour dialoguer avec l'émetteur des données, ici donc un autre télécopieur.

Pour la clarté du dessin, les liaisons entre les divers circuits sont directes, mais, en pratique, elles passent par l'unité centrale 21 ou, au moins, leur séquencement est commandé par celle-ci, par exemple la lecture de la mémoire 222.

Le fonctionnement du télécopieur, lors de la réception de données de télécopie à imprimer, va maintenant être expliqué plus en détails.

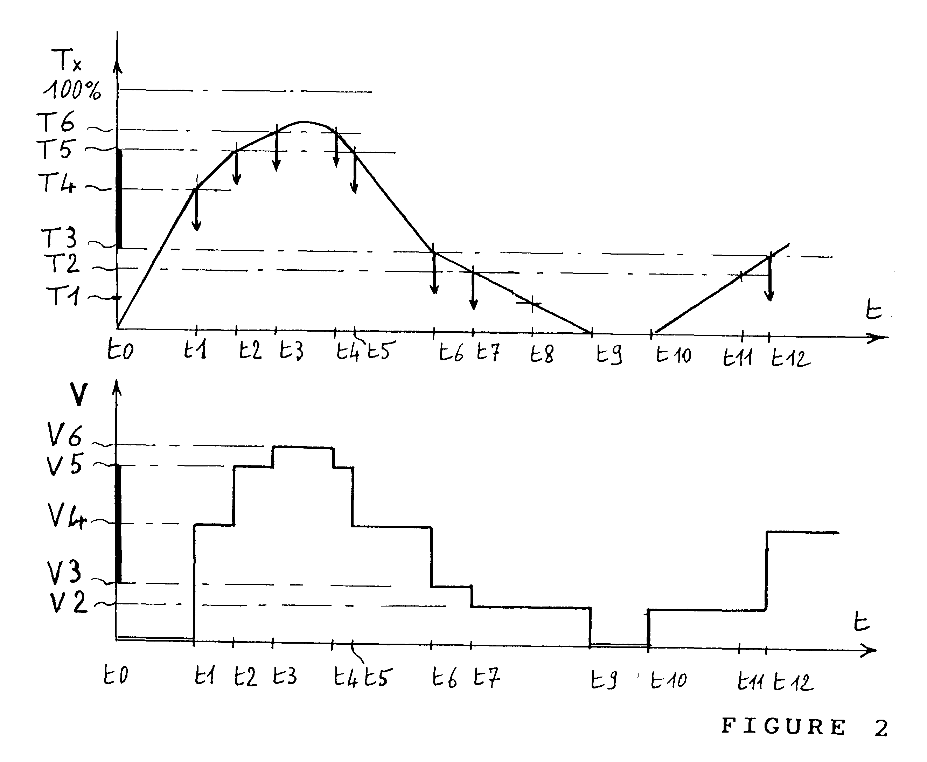

Les données de début de la page à imprimer sont mémorisées dans la mémoire tampon 222 et le circuit 23 en détermine cycliquement le volume de remplissage et fournit le résultat à l'unité centrale 21. Celle-ci compare ce volume mesuré à une valeur de seuil haut déterminé T4 (fig. 2), pour entamer l'impression si le seuil est dépassé.

Comme le volume mémoire total 222 est connu, la mesure du volume occupé exprime en fait aussi le taux de remplissage Tx de la mémoire 222. C'est ce taux Tx qu'il s'agit de réguler, et non spécifiquement le volume en lui-même. En d'autres termes, même si les calculs portent sur des volumes de données, les décisions de régulation sont liées à des seuils de volume occupé qui ont été fixés en fonction du volume total disponible et qui traduisent donc un taux de remplissage.

Pour cette régulation, l'unité centrale 21 comporte une loi de régulation de la vitesse de rotation du rouleau 1, et donc de la lecture simultanée de la mémoire 222, en fonction du taux de remplissage Tx fourni par le circuit 23.

Les figures 2A et 2B de la figure 2 illustrent cette loi de régulation en fonction du temps t en abscisse. La figure 2A comporte en ordonnée le taux de remplissage Tx de la mémoire 222 et la figure 2B comporte en ordonnée la vitesse résultante V d'impression ou d'avance en rotation du rouleau 1.

Dans cet exemple, le taux Tx est régulé pour qu'il se situe, dans la mesure du possible, dans une plage centrale T3 - T5, allant par exemple de 30 à 70 %. La régulation est ici par paliers de vitesse d'impression, c'est-à-dire que, dans cette plage, la vitesse d'impression V est fixée à une valeur moyenne V4 et le taux Tx pompe entre les valeurs T3 et T5 selon l'écart entre la vitesse de remplissage de la mémoire 222 et la vitesse d'impression V.

Un passage en-dessous du taux T3 entraîne une réduction de vitesse d'impression, à une vitesse V3, tandis qu'un passage au-dessus du taux T5 entraîne un accroissement de vitesse d'impression, à une vitesse V5.

Il est en outre défini une plage de taux Tx élargie, T2 - T6, formée de la plage T3 - T5, encadrée de deux plages T2 - T3 et T5 - T6. Toute sortie de la plage T2 - T6 entraîne de nouvelles modifications de la vitesse d'impression V, respectivement le passage à une vitesse basse d'impression, plancher, V2, et à une vitesse maximale d'impression, V6.

Ainsi, des instants t0 à t1, le taux Tx passe d'une valeur nulle à une valeur de seuil T4, dans la plage T3 - T5, de seuil haut déterminé pour laquelle l'unité centrale 21 va entamer l'impression dès qu'il est franchi.

La vitesse V passe alors de zéro à la valeur moyenne V4. La vitesse de transmission en ligne des données à imprimer étant alors supposée être supérieure à la vitesse d'impression V, le taux Tx dépasse le seuil T5 à l'instant t2 ce qui fait passer la vitesse à V5. La poursuite de la croissance de Tx fait ensuite franchir le seuil T6, ce qui fait passer la vitesse d'impression V à la valeur maximale V6 à l'instant t3. Un ralentissement de la vitesse de transmission produit alors une retombée de Tx, et la vitesse d'impression V retombe alors à V5, à t4, puis à V0 à t5 (plage T3 - T5). Deux franchissements successifs vers le bas des seuils T3 et T2 font passer aux vitesses d'impression V3 puis V2, plancher, aux instants t6 et t7 respectifs.

On suppose ici que le taux Tx passe à zéro à l'instant t9. L'impression doit donc être suspendue et la vitesse d'impression V passe à zéro. A l'instant t8 de passage sous le seuil d'alarme T1, l'unité centrale 21 a commandé, par l'interface 225, l'émission, sur la ligne de liaison 30, d'une demande de retransmission des dernières données transmises, c'est-à-dire le début de page, car l'impression risque d'avorter. Afin d'éviter cependant une retransmission inutile, si de nouvelles données sont reçues à court terme, le seuil d'alarme T1 peut être pris égal à zéro et, indépendamment, l'unité centrale 21 peut temporiser, d'une valeur déterminée, la demande de retransmission et l'annuler en cas de réception de nouvelles données avant l'expiration de la temporisation. En pratique, le rouleau 1 peut servir de mémoire tampon temporaire pendant environ 5 secondes, sans perte notable de qualité d'image. Cette mémoire temporaire a une taille qui dépend de la position angulaire aval du rouleau laminoir 7, au niveau duquel l'image formée par électrostatisme est restituée sur le papier.

A l'instant t10, suivant, à par exemple deux secondes, l'instant t9, de nouvelles données sont reçues et imprimées immédiatement à vitesse minimale V2. Le franchissement de seuil T2 est alors sans effet à l'instant t11 et le franchissement du seuil T3 entraîne une remontée de la vitesse à la valeur moyenne V4.

En variante, après un passage à zéro (t9) du taux Tx, il peut être prévu de gérer au mieux les nouvelles données reçues (t10) afin d'éviter un nouveau passage à zéro du taux Tx, passage qui risque toujours d'être fatal si la pénurie de données se prolonge. Pour cela, l'unité centrale 21 détermine, avant toute reprise de l'impression, d'après la configuration mécanique des éléments d'impression et l'historique de la rotation du rouleau 1 depuis le début de l'image en cours, l'ancienneté de la ligne d'image la plus ancienne du rouleau 1, c'est-à-dire celle qui va être restituée en premier sur le papier dès qu'une nouvelle ligne pourra être écrite optiquement sur le rouleau 1, qui pourra ainsi avancer pour l'impression papier. Le rouleau 1 est ainsi fonctionnellement une FIFO de longueur fixe, ou encore une ligne à retard variable, réglable jusqu'à atteindre 5 secondes. L'impression de nouvelles données est alors différée jusqu'à ce que cette ancienneté atteigne sensiblement 5 secondes. On "consomme" ainsi en lecture les données en mémoire 222 au rythme le plus faible possible ce qui permet de ménager le stock et ainsi combler éventuellement un arrêt prolongé de la réception en ligne. La vitesse de rotation du tambour 1 peut alors devoir être accrue sensiblement un court instant si tout un bloc de lignes anciennes a été écrit à grande vitesse, c'est-à-dire qu'elles ont sensiblement la même ancienneté. Comme cependant la limite de 5 secondes n'est pas une limite rigoureuse, on peut prévoir de la dépasser légèrement, en n'augmentant pas sensiblement la vitesse d'impression, dans le cas évoqué.

Par ailleurs, afin d'éviter d'émettre une demande de retransmission dans le cas où les données en mémoire 222 suffisent pour terminer une page, l'unité centrale 21 comporte en mémoire le format d'image prédéterminé, ou nombre de lignes par page, et peut donc déterminer le pourcentage d'image déjà reçue, et déterminer ainsi si toute l'image a été reçue, même si la fin de celle-ci est encore en mémoire 222, afin d'inhiber en pareil cas la demande de retransmission liée au franchissement du seuil d'alarme T1. L'impression peut en outre être effectuée à toute vitesse souhaitée, comme la vitesse moyenne V4.

La modulation exposée ci-dessus de la vitesse d'impression V, ou rythme de balayage en lecture de la mémoire 222 et d'avance ligne du tambour 1, peut être associée à une modulation correspondante de la vitesse de rotation du moteur 54 de balayage ligne. En effet, si le rythme d'avance ligne du tambour 1 s'accroît, comme il faut conserver un temps déterminé pour l'avance ligne du tambour 1, il faudra éventuellement réduire le temps de balayage ligne, donc accélérer aussi la rotation du moteur 54. De ce fait, l'unité centrale 21 commande la vitesse de balayage du moteur 56 en fonction du taux de remplissage Tx. La puissance de la source laser 51 peut éventuellement être alors augmentée pour compenser la réduction du temps de passage sur la génératrice.

On prévoit en outre de télécommander l'émetteur des données, ici le télécopieur, pour réguler le taux de remplissage. L'unité centrale 21 émet en ligne 30 une demande de nouvelles données en cas de baisse excessive du taux de remplissage et émet une indication de refus de nouvelles données, si celui-ci est excessif. Dans le cadre d'un protocole normalisé, cette dernière indication peut prendre la forme d'une indication classique de détection de défaut de transmission et de demande de répétition de l'émission des données. Le protocole T30 de télécopie étant ici géré par les circuits 225, qui ainsi gèrent et régulent le débit des données reçues, l'unité centrale 21 commande les circuits 225 pour qu'à leur tour ils asservissent et régulent l'émission du télécopieur émetteur.

Comme le papier imprimé passe à vitesse variable devant le four 17, l'unité centrale 21 règle la température de celui-ci, pour la cuisson des pigments d'impression déposés sur la feuille, en fonction de la vitesse de rotation du tambour 1, et plus précisément dans le même sens de variation que celle celle-ci, afin de transférer une énergie thermique sensiblement constante en chaque point.

## Revendications

1. Imprimante à tambour de formation d'image électrostatique (1), couplé à des moyens (31) d'entraînement en rotation, imprimante comportant des moyens séquenceurs (21) agencés pour, d'une part, lire à un rythme déterminé des moyens mémoires (222) de réception de données numériques de lignes d'image, et pour commander, par lesdites données, des moyens (5) émetteurs d'un faisceau optique de balayage ligne du tambour (1) et pour, d'autre part, commander, par les moyens d'entraînement (31), une rotation du tambour synchronisée sur le rythme de lecture des lignes, caractérisée par le fait qu'elle comporte des moyens (23) de détermination du taux de remplissage des moyens mémoires (222), agencés pour commander, par les moyens séquenceurs (21), une régulation du taux de remplissage des moyens mémoires (222), par une modulation du rythme de lecture de ceux-ci, avec une modulation correspondante de la vitesse de rotation du tambour (1) et les moyens séquenceurs (21) sont agencés pour commander des moyens (225) de régulation de débit sur une liaison de données (30) reliée aux moyens mémoires (222).

2. Imprimante selon la revendication 1, dans laquelle les moyens séquenceurs (21) sont agencés pour, en cas de descente en-dessous d'un seuil d'alarme (T1), commander l'émission sur la liaison (30), par les moyens de régulation (225), d'une demande de retransmission des dernières données transmises.

3. Imprimante selon la revendication 2, dans laquelle les moyens séquenceurs (21) sont agencés pour temporiser, d'une valeur déterminée, la demande de retransmission et pour l'annuler en cas de réception de nouvelles données avant expiration de la temporisation.

4. Imprimante selon l'une des revendications 2 et 3, dans laquelle les moyens séquenceurs (21) sont agencés pour déterminer le nombre de lignes d'une image reçue dans les moyens mémoires (222), pour en déduire, d'après un format d'image prédéterminé, si toute l'image a été reçue et pour inhiber en pareil cas toute demande de retransmission.

5. Imprimante selon l'une des revendications 1 à 4, dans laquelle les moyens séquenceurs (21) sont agencés pour entamer l'impression lorsque le taux de remplissage dépasse un seuil haut déterminé (T4).

6. Imprimante selon l'une des revendications 1 à 5, dans laquelle les moyens séquenceurs (21) sont agencés pour commander la vitesse de balayage des moyens optiques (5) en fonction dudit taux de remplissage.

7. Imprimante selon l'une des revendications 1 à 6, dans laquelle les moyens séquenceurs (21) sont agencés pour régler, en fonction de la vitesse de rotation du tambour (1), la température de moyens (17) de cuisson de pigments d'impression déposés sur une feuille en cours d'impression.
